# EUROPEAN PATENT SPECIFICATION

(11) **EP 2 698 529 B1**
(45) Date of publication and mention of the grant of the patent: **28.10.2015**
(21) Application number: 12180429.8
(22) Date of filing: 14.08.2012
(51) Int. Cl.: F03D 1/00, F03D 11/00

(54) **Wind turbine**
Windturbine
Éolienne

(43) Date of publication of application: 19.02.2014
(73) Proprietor: Siemens Aktiengesellschaft, 80333 München (DE)
(72) Inventor: Munk-Hansen, Thorkil, 7323 Give (DK)

(56) References cited:
- ES-B1- 2 360 779
- US-B1- 6 285 090

## Description

The invention relates to a wind turbine, comprising a hollow stator shaft, a rotor and a rotor hub, with at least one support platform device facilitating access to the inner of the rotor hub.

Wind turbines usually comprise several main components such as blades, hub, generator/drive train, nacelle, bed frame tower and foundation. The hub serves as an adapter piece or interface between the blades and the generator/drive train of the wind turbine. To allow a safe and controllable operation, modern wind turbines comprise a pitch system which allows the adjustment of the angle of attack of the blades, to optimise aerodynamic performance, reduce loads on the wind turbine or induce a stall and cause breaking. The hydraulic pitch system comprises several components like a pitch bearing, hydraulic cylinders, a pump, valves, a power supply, a hydraulic fluid tank, an accumulator and hoses. Most of these items are installed within the hub. The hub further contains lightning down conductors, cabling and various sensors.

Wind turbines need to be frequently accessed for maintenance purpose by maintenance personal. Since several components are installed within the hub it is necessary to provide access to the hub. To allow access US 8061999 B2 discloses an arrangement with a ladder structure mounted to an outside of the hub. The ladder allows service personal to gain access to the hub from an upwind side using the ladder and a manhole in the hub. An alternative access to the hub is disclosed for direct drive wind turbines. Direct drive wind turbines for instance are known from US 7431567. This document discloses the direct drive wind turbine with a generator circumventing an inside hollow spindle which allows access from a tower to a hub.

Document ES2360779 presents a wird turbine with a maintenance platform housed inside a hollow stator shaft.

None of the known solutions provides a really safe and easy access for the service personal to the inner of the hub.

It is an object of the invention to further improve the safety of wind turbines in particular for maintenance personal and to allow an easy entering of the interior of the hub.

According to the invention, the object is achieved by a wind turbine, especially a direct drive wind turbine, comprising a hollow stator shaft, a rotor and a rotor hub, characterized in that the at least one platform device comprises a first platform which is detachably mounted to a stationary mounting surface facing directly to the inner of the rotor hub.

According to the invention the access to the hub is possible through a hollow stator shaft used in a wind turbine the invention is directed to especially a direct drive wind turbine. The invention takes further into account that wind turbines with increasing hub size are built. Due to that the hollow stator shaft becomes even larger in diameter, thus allowing an easy access to the rotor hub right through the hollow stator shaft, having a diameter allowing a man to easily walk upright through the shaft. According to the invention at least one support platform device is used, which is detachably, but firmly mounted to a stationary mounting surface, which faces directly into the inner of the rotor hub. The hollow stator shaft ends right next to the stationary mounting surface, which faces axially right into the rotor hub. By mounting the platform device to this stationary mounting surface maintenance personal can easily step on the platform device and get access to the inner of the rotor hub, having a diameter even larger than the diameter of the hollow stator shaft. Accordingly, a person entering the interior of the rotor hub for maintenance purpose steps on, stands on, sits on or makes otherwise use of the support platform device. The support platform reduces the need for wearing or carrying extensive safety gear such as safety belts, gears or harnesses without compromising security. This in turn makes inspection of the wind turbine quicker and easier, so that maintenance expenses are reduced.

The stationary mounting surface may be provided by different stationary devices. It may either be provided by the front end of the stationary shaft itself. The stationary shaft runs right to the entrance of the hub. Since the stator shaft is, by nature, stationary, the front end of the shaft can easily be used as a mounting surface for the platform device. An alternative to the front end of the stator shaft is the stationary ring of a rotor bearing. This rotor bearing having a diameter even larger than the diameter of the stator shaft bears the rotor, which is coupled to the hub respectively the blades, and which runs around the stationary stator. The rotor bearing comprises a stationary ring, which provides the stationary mounting surface. Since this rotor bearing (or at least one of the several rotor bearings needed for bearing the rotor) is positioned right at the interface between the hollow stator shaft and the hub, the stationary ring of the rotor bearing can also provide the respective stationary mounting surface for the platform device. Finally, a third alternative device for providing the stationary mounting surface is an ovalization ring, which is, if installed, mounted to the stator shaft and/or the stationary ring of the rotor bearing. This ovalization ring has also a sufficient inner diameter to easily allow access through the hollow stator shaft to the inner of the hub. It also has a sufficient outer diameter to provide a sufficient mounting ring surface for fixing the platform device. Thus there are several alternatives of devices providing the stationary mounting surface, so that there are sufficient possibilities for securely fixing the platform.

The platform device comprises according to the invention a first platform and one or two separately mounted or mountable fences. The first platform is mounted at the lower end of the respective stationary mounting surface, thus providing a basis platform, on which the maintenance personal can easily step when stepping out of the hollow stator shaft. For safety reason one or two separately stationary mounted or mountable fences are provided, which are either also mountable or mounted to the stationary mounting surface, or which can be or are fixed to other stationary parts next to the mounting surface, like the parts of a door frame mounted within the inner diameter of the mounting surface, for example the ovalization ring or the like. These one or two fences avoid the risk that the maintenance personal falls from the platform into the hub.

As already explained the diameter of the hub increases with even larger wind turbines. To allow access also to devices being installed at elevated positions within the hub, a second platform separately mountable in parallel but vertically and circumferentially displaced to the first platform is provided. This second platform is mounted to the stationary mounting surface, it can also be partly fixed for example to the above depicted fence. It provides a second elevated platform, on which the service personal can step on, sit on etc. It is obvious, that it is advantageous to provide a third platform separately mountable adjacent and at the same level as the second platform, so that there are two elevated platforms, circumferentially displaced to each other allowing access to both sides of the hub.

To allow easy access to the second and/or third platform the fences used for safe guarding the first platform act as ladders ending at the second or third platform. Maintenance personal can step on the first platform and climb up one of the fences acting as a ladder to easily get access to the second or third platform.

For safety reason the wind turbine comprises further fences mountable to the second or third platform at the front end of the same to avoid the risk that the maintenance personal can fall off one of these platforms.

When a second and third platform are installed it is advantageous to provide a separately mountable hatch bridging from the second platform to the third platform, with the hatch being removably or being movably between an open position and a bridging position. The hatch closes a gap between the second and third platform being mounted on the same level to provide a complete platform running from one side of the stationary mounting device to the other side. If need be this hatch can be removed in total or can be swivelled from its bridging position to an open position.

Furthermore the inventive wind turbine comprises a further fence mountable at a door frame or a door construction closing the opening of the part comprising the mounting surface. This fence is especially advantageous when the hatch is installed, for avoiding the risk that the maintenance personal falls from the hatch back into the hollow stator shaft. On the other side the fences mounted to the second and third platform may be designed to also extend along the hatch respectively to close the respective gap at the front of the platform device.

Within the maintenance procedure it is sometimes necessary to detach a broken device or to mount a new device. In any case the respective device, often being large and heavy, needs to be transported from the hub through the shaft or through the shaft to the hub. To allow this transport the inventive turbine further comprises a mountable transport rail running through the part comprising the mounting surface, with the fences mountable to the second and third platform being distanced to each other and/or the further fence having an opening allowing through passage of a holding means of an object hanging on the rail. The modular platform device is designed to allow mountening of the transport rail extending from the hollow shaft to the inner of the hub, with this transporting rail preferably being swivelable about a vertical axis. The hatch, if installed, is to be removed in order to allow the transport of the object hanging on the rail by means of a holding means like a chain or the like. To allow the through passage of this holding means through the fences, the fences are designed to have an opening or to provide an opening allowing this through passage. When the hatch is removed, there is enough vertical and lateral space to guide the hanging object through the platform device still being installed.

Finally the inventive wind turbine comprises a door construction with at least one door providing access to the inner of the rotor hub, with the door being openable only when the rotor is in a locked position, necessary to avoid the possibility of accessing the rotor hub while the same is still rotating.

Specific embodiments of the invention will be described in detail herein below with reference to the figures, wherein
- fig. 1: shows a principle drawing of an inventive wind turbine,
- fig. 2: shows a principle cut view of the wind turbine according to fig. 1,
- fig. 3: showing only the relevant parts of the wind turbine in form of an ovalization ring providing the stationary mounting surface, seen from the side of the hollow stator shaft,
- fig. 4: shows the ovalization ring from the other side,
- fig. 5: shows the ovalization ring with a first platform,
- fig. 6: shows the ovalization ring with the mounted second platform,
- fig. 7: shows the ovalization ring with the mounted third platform,
- fig. 8: shows the ovalization ring with the mounted hatch,
- fig. 9: shows the ovalization ring with mounted fences to the second and third platform, and
- fig. 10: shows the ovalization ring with a further fence mounted to the door structure and with the mounting transportation rail.

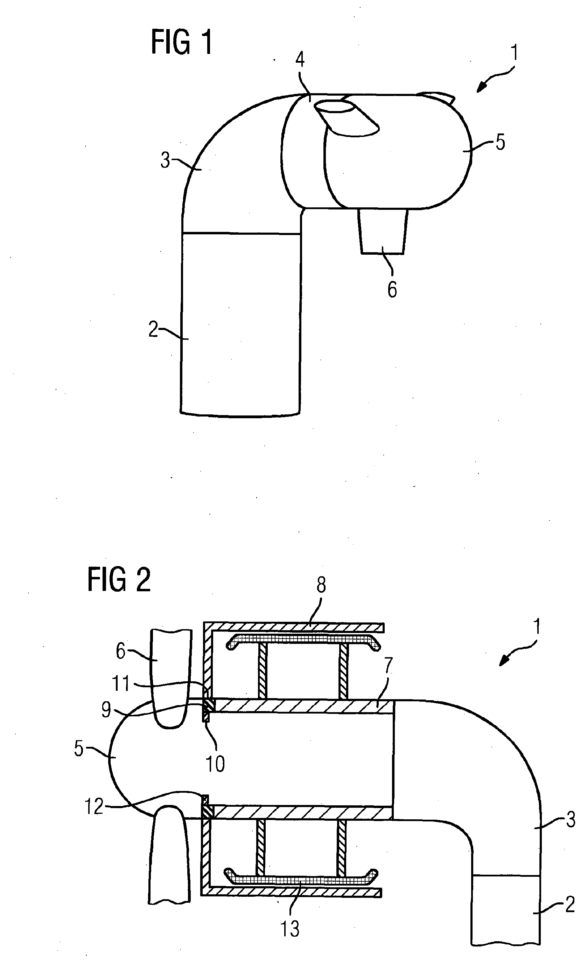

Fig. 1 shows an inventive wind turbine 1 comprising a tower 2, a bed frame 3, a generator 4 and a rotor hub 5 with several blades 6. The hub serves as an interface between the blades 6 and the generator 4 transferring the torque onto the rotor of the generator.

Fig. 2 depicts a section through a direct drive wind turbine 1 according to fig. 1 in the area of the top of the tower 2. The bed frame 3 rests on the tower 2 holding a hollow tubular shaft 7 being part of the generator 4. The generator 4 further comprises a rotor 8 being rotable relative to the stator 7 via a rotor bearing 9 comprising a stationary bearing ring 10 mounted to the hollow stator shaft, while the second running ring 11 of the bearing 9 is fixed to the rotor 8. Furthermore an ovalization ring 12 is shown, also mounted to the front end of the stator shaft. The stator shaft itself is provided with a bunch of stator segments 13 comprising coils, as widely known.

The rotor 8 is coupled to the hub 5, which in turn is coupled to the blades 6. Thus, when the system rotates, the hub 5 is rotated by the three turbine blades, which are mounted via respective pitch bearings to the hub 5. With the hub 5 also the rotor 8 rotates, comprising a bunch of permanent magnets interacting with the coils of the stator segments 13 as widely known.

The hub 5 comprises hydraulic cylinders, pump valves, power supply, hydraulic tank and accumulator and hoses and other devices like a lightning down conductor, cabling and various sensors, which are either necessary for the pitch control of the blades or the safety of the turbine itself. As shown, the stationary shaft 7 is hollow, thus providing direct access to the hub 5 from the tower 2.

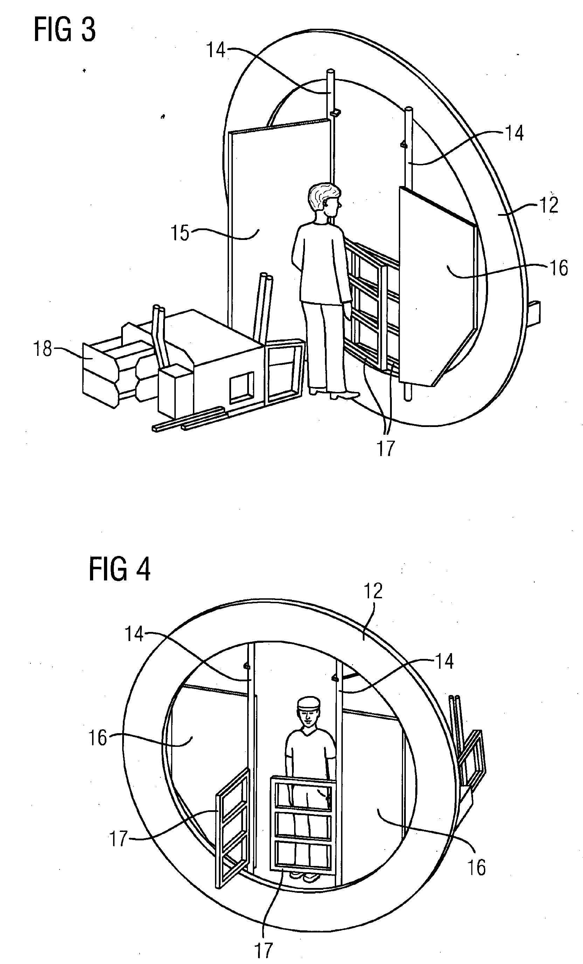

Fig. 3 depicts the ovalization ring 12 seen in perspective looking toward the hub 5 from the side of the stator shaft 7. The ovalization ring is mounted to the here not closer depicted stationary ring 10 of the rotor bearing 9 and/or the front end of the stator shaft 7. A door construction 14 is mounted within the inner of the ovalization ring, comprising a door 15 hinged to the door frame construction, and two side closures 16 for closing the side parts of the ovalization ring 12.

As can be seen, when the door 15 is open, two fences 17 hinged to the door frame construction 14 are closed. To get access to the inner of the hub 5 through the ovalization ring 12 the service personal now mounts a modular platform device comprising several pieces made of aluminium, glass fibre or other composites. The single pieces are fit into a carrier 18, so that they can be transported within the hollow stator shaft 7.

Hereafter several steps of the installation of the platform device are described in connection with the figures. The perspective is a view on the ovalization ring from the hub side towards the stator shaft.

Fig. 4 shows the situation according to fig. 3 from the other side. A service man has opened one of the fences 17, the other fence 17 is still to be opened. This is only possible after the rotor has securely been locked, since the door 15 can only be opened when the rotor is in a safety position, i.e. locked.

Bringing both fences 17 into an open and locked position, the service personal can now mount a first platform 19 to the mounting surface 20 of the ovalization ring. As can be seen, the platform 19 is on both sides safeguarded by the locked fences 17, allowing a safe access of the personal onto the first platform 19.

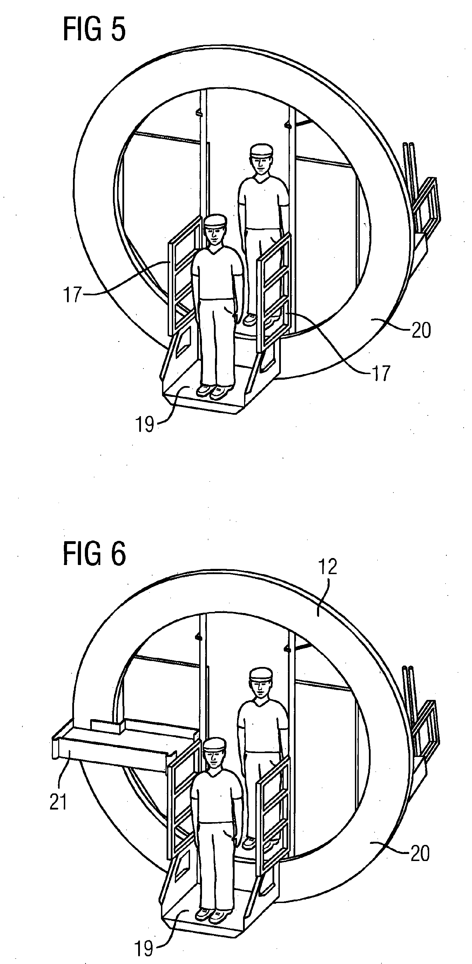

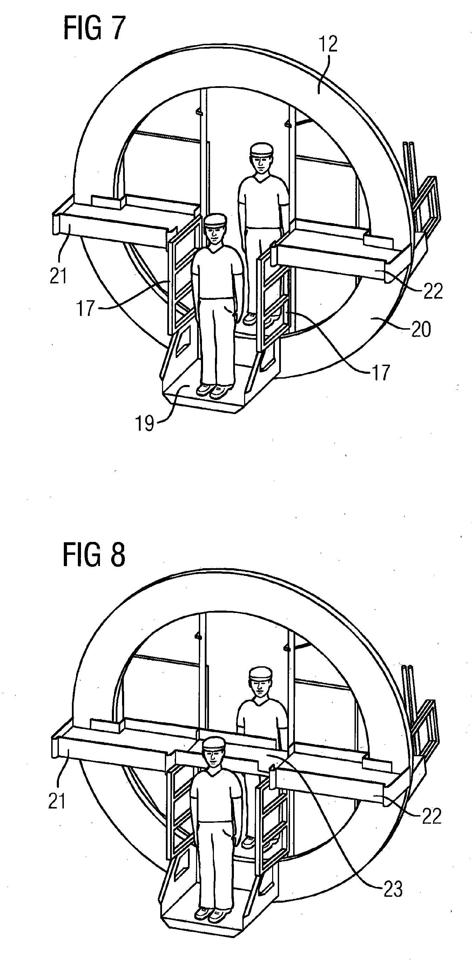

According to fig. 6, a second platform 21 is mounted to the mounting surface 20 of the ovalization ring 12 at an elevated, but circumferentially disposed position relative to the first platform 19. According to fig. 7 a third platform 22 is mounted to the mounting surface 20 of the ovalization ring on the other side at the same level as the second platform 21. As shown in fig. 7, both platforms 21, 22 end at the locked fences 17. These locked fences 17 act as ladders allowing the maintenance person to climb from the first platform 19 to one of the second or third platforms 21, 22.

For bridging the second and the third platform 21, 22 a hatch 23 is fixed to one of the platforms 21, 22, which hatch 23 can preferably be swivelled to bring it from a close position (see fig. 8) to an open position as shown later.

Afterwards further fences 24 are mounted to the second and third platform 21, 22. As can be seen, these fences 24 also extend along the hatch 23, but have a small gap 25 between their respective ends.

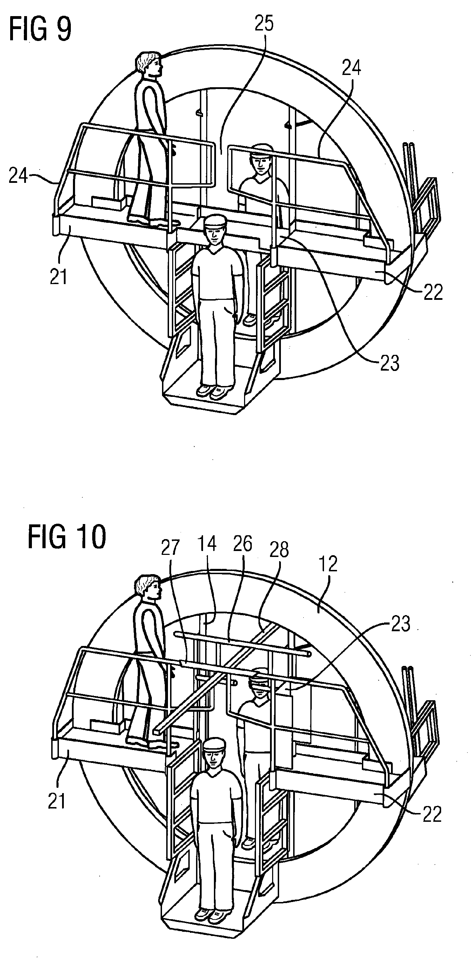

As can be seen in fig. 9, this mounted modular platform device now provides easy access to several platforms and thus several levels, with each platform being safeguarded by respective fence.

To provide further security against falling back through the ovalization ring into the stator shaft when having climbed to one of the second or third platforms 21, 22, a further fence 26 is fixed to the door frame construction 14. Also this frame has a gap 27, being in axial alignment with the gap 25 of the fences 24. These gaps are necessary to allow the transport of heavy objects from the stator shaft to the hub and vice versa. For this transport purpose a transport rail 28 (crane rail) can be installed to move components through the stator shaft from a storage facility in the aft part of the wind turbine to the hub and backwards. The transport rail 28 is hinged with the stationary structure of the wind turbine to allow movement of components to a right or left location in the hub. The transport rail 28 can only be installed when the door 15 is opened. The door 15 can not be closed when the transport rail 28 is installed (mechanically blocking). This is to avoid operation of the wind turbine, i.e. rotation of the hub, while the transport rail 28 projects into the hub, since the door can only be opened when the rotor lock is engaged.

Any object to be transported via the transport rail 28 hangs via holding means like chain or rope down from the transport rail 28. This holding means now can easily pass through the respective gaps 27 and 25 to bring the object into the hub. Afterwards the transport rail 28 is turned into the direction where the object is to be transported to. As can be seen in fig. 10, the hatch 23 is swivelled into the open position, so there is enough space to transport the object through the stationary ovalization ring 12 and the complete support platform device.

Although the present invention has been described in detail with reference to the preferred embodiment, the present invention is not limited by the disclosed examples from which the skilled person is able to derive other variations without departing from the scope of the invention.

## Claims

1. Wind turbine, comprising a hollow stator shaft (7), a rotor (8) and a rotor hub (5), with at least one support platform device (18) facilitating access to the inner of the rotor hub (5), with the at least one platform device (18) comprises a first platform (19) which is detachably mounted to a stationary mounting surface (20) **characterised by** the mounting surface facing directly to the inner of the rotor hub (5).

2. Wind turbine according to claim 1, with the stationary mounting (20) surface being provided by the front end of the stator shaft (7), or by an ovalization ring (12) or by the stationary ring (10) of a rotor bearing (9).

3. Wind turbine according to claim 1 or 2, further comprising one or two separately mountable or mounted fences (17).

4. Wind turbine according to claim 3, comprising a second platform (21) separately mountable to the mounting surface (20) in parallel but vertically and circumferentially displaced to the first platform (19).

5. Wind turbine according to claim 4, comprising a third platform (22) separately mountable to the mounting surface (20) adjacent and at the same level as the second platform (21).

6. Wind turbine according to claim 4 or 5, with the fences (17) acting as ladders ending at the second or third platform (21, 22).

7. Wind turbine according to one of the claims 4 to 6, comprising further fences (24) mountable to the second or third platform (21, 22).

8. Wind turbine according to one of the claims 5 to 7, comprising a separately mountable hatch (23) bridging from the second platform (21) to the third platform (22), with the hatch being removably or being movably between an open position and a bridging position.

9. Wind turbine according to one of the claims 4 to 8, comprising a further fence (26) mountable at a door frame (14) or a door construction closing the opening of the part comprising the mounting surface (20).

10. Wind turbine according to one of the claims 7 to 9, comprising a mountable transport rail (28) running through the part with the mounting surface (20), with the fences (24) mountable to the second and third platform (21, 22) being distanced to each other and/or the further fence (26) having an opening (27) allowing through passage of a holding means for an object hanging on the transport rail (28).

11. Wind turbine according to one of the preceding claims, comprising a door construction (14) with at least one door (15) providing access to the inner of the rotor hub (5), with the door (15) being openable only when the rotor (8) is in a locked position.

## Patentansprüche

1. Windturbine, umfassend eine hohle Statorwelle (7), einen Rotor (8) und eine Rotornabe (5), mit wenigstens einer Wartungsplattformvorrichtung (18), die den Zugang zum Inneren der Rotornabe (5) erleichtert, wobei die wenigstens eine Plattformvorrichtung (18) eine erste Plattform (19) umfasst, die an einer stationären Montagefläche (20) lösbar montiert ist, **dadurch gekennzeichnet, dass** die Montagefläche dem Inneren der Rotornabe (5) direkt gegenüberliegt.

2. Windturbine nach Anspruch 1, wobei die stationäre Montagefläche (20) aus dem vorderen Ende der Statorwelle (7) oder aus einem Ovalisierungsring (12) oder aus dem stationären Ring (10) eines Rotorlagers (9) besteht.

3. Windturbine nach Anspruch 1 oder 2, weiterhin umfassend ein oder zwei getrennt montierbare oder montierte Gitter (17).

4. Windturbine nach Anspruch 3, umfassend eine zweite Plattform (21), die an der Montagefläche (20) parallel, aber vertikal und in Umfangsrichtung versetzt zur ersten Plattform (19) getrennt montierbar ist.

5. Windturbine nach Anspruch 4, umfassend eine dritte Plattform (22), die an der Montagefläche (20) nahe der und auf derselben Höhe wie die zweite Plattform (21) getrennt montierbar ist.

6. Windturbine nach Anspruch 4 oder 5, wobei die Gitter (17) als Leitern dienen, die an der zweiten oder dritten Plattform (21, 22) enden.

7. Windturbine nach einem der Ansprüche 4 bis 6, umfassend weitere Gitter (24), die an der zweiten oder dritten Plattform (21, 22) montierbar sind.

8. Windturbine nach einem der Ansprüche 5 bis 7, umfassend eine getrennt montierbare Klappe (23), die eine Brücke zwischen der zweiten Plattform (21) und der dritten Plattform (22) bildet, wobei die Klappe entfernbar oder zwischen einer offenen Position und einer überbrückenden Position beweglich ist.

9. Windturbine nach einem der Ansprüche 4 bis 8, umfassend ein weiteres Gitter (26), das am einem Türrahmen (14) oder einer Türkonstruktion montierbar ist, welcher bzw. welche die Öffnung des die Montagefläche (20) umfassenden Teils verschließt.

10. Windturbine nach einem der Ansprüche 7 bis 9, umfassend eine montierbare Transportschiene (28), die durch das Teil mit der Montagefläche (20) verläuft, wobei die an der zweiten und der dritten Plattform (21, 22) montierbaren Gitter (24) voneinander beabstandet sind und/oder das weitere Gitter (26) eine Öffnung (27) aufweist, die den Durchtritt einer Halteeinrichtung für einen an der Transportschiene (28) hängenden Gegenstand zulässt.

11. Windturbine nach einem der vorhergehenden Ansprüche, umfassend eine Türkonstruktion (14) mit wenigstens einer Tür (15), die den Zugang zum Inneren der Rotornabe (5) ermöglicht, wobei die Tür (15) nur dann öffenbar ist, wenn der Rotor (8) sich in einer gesperrten Position befindet.

## Revendications

1. Éolienne, comprenant un arbre (7) creux de stator, un rotor (8) et un moyeu (5) de rotor, avec au moins un dispositif (18) de plate-forme de support facilitant l'accès à l'intérieur du moyeu (5) de rotor, avec l'au moins un dispositif (18) de plate-forme comprend une première plate-forme (19) qui est montée de façon détachable sur une surface de montage (20) fixe, **caractérisée par** la surface de montage faisant directement face à l'intérieur du moyeu (5) de rotor.

2. Éolienne selon la revendication 1, avec la surface de montage (20) fixe étant fournie par l'extrémité avant de l'arbre (7) de stator, ou par une bague d'ovalisation (12) ou par la bague fixe (10) d'un palier (9) de rotor.

3. Éolienne selon la revendication 1 ou 2, comprenant en outre une ou plusieurs barrière(s) (17) séparément montables ou montées.

4. Éolienne selon la revendication 3, comprenant une deuxième plate-forme (21) séparément montable sur la surface de montage (20) en parallèle mais verticalement et circonférentiellement déplacée à la première plate-forme (19).

5. Éolienne selon la revendication 4, comprenant une troisième plate-forme (22) séparément montable sur la surface de montage (20) adjacente à et au même niveau que la deuxième plate-forme (21).

6. Éolienne selon la revendication 4 ou 5, avec les barrières (17) agissant comme des échelles se terminant au niveau de la deuxième ou de la troisième plate-forme (21, 22).

7. Éolienne selon l'une des revendications 4 à 6, comprenant d'autres barrières (24) montables sur la deuxième ou la troisième plate-forme (21, 22).

8. Éolienne selon l'une des revendications 5 à 7, comprenant une trappe (23) montable séparément reliant la deuxième plate-forme (21) à la troisième plate-forme (22), avec la trappe étant amovible ou étant mobile entre une position ouverte et une position de liaison.

9. Éolienne selon l'une des revendications 4 à 8, comprenant une autre barrière (26) montable au niveau d'un encadrement (14) de porte ou d'une construction de porte fermant l'ouverture de la partie comprenant la surface de montage (20).

10. Éolienne selon l'une des revendications 7 à 9, comprenant un rail de transport (28) montable traversant la partie avec la surface de montage (20), avec les barrières (24) montables sur la deuxième ou la troisième plate-forme (21, 22) étant à distance l'une de l'autre et/ou l'autre barrière (26) ayant une ouverture (27) permettant un passage traversant d'un moyen de maintien pour un objet suspendu sur le rail de transport (28).

11. Éolienne selon l'une des revendications précédentes, comprenant une construction (14) de porte avec au moins une porte (15) donnant accès à l'intérieur du moyeu (5) de rotor, avec la porte (15) n'étant ouvrable que lorsque le rotor (8) est dans une position verrouillée.
